**Europäisches Patentamt**

**European Patent Office**

**Office européen des brevets**

(19)

(11) Numéro de publication: **0 022 119**

**A2**

(12)

# DEMANDE DE BREVET EUROPEEN

(21) Numéro de dépôt: **80870034.8**

(22) Date de dépôt: **17.06.80**

(51) Int. Cl.³: **F 16 L 39/04**
**H 01 R 39/00, E 03 C 1/00**

(30) Priorité: **21.06.79 BE 195874**

(43) Date de publication de la demande:
**07.01.81 Bulletin 81 1**

(84) Etats Contractants Désignés:
**AT CH DE FR GB IT LI LU NL SE**

(71) Demandeur: **Massau, Julien**
**Genistroit 132**
**B-1348 Louvain-la-Neuve(BE)**

(72) Inventeur: **Massau, Julien**
**Genistroit 132**
**B-1348 Louvain-la-Neuve(BE)**

(74) Mandataire: **Vanderperre, Robert et al,**
**Bureau VANDER HAEGHEN 63 Avenue de la Toison d'Or**
**B-1060 Bruxelles(BE)**

(54) **Système de collecteurs pour conduites dans une habitation orientable.**

(57) Un système de collecteurs autonomes et facilement déconnectables pour assurer le passage des diverses conduites dans une habitation orientable (eau, décharge, câbles électriques). Chaque circuit de conduite est associé à un collecteur individuel (20), de forme générale annulaire, constitué par deux éléments annulaires (21,22) assemblés pour former entre eux au moins une chambre annulaire (50), le premier des deux éléments étant solidaire de l'ensemble fixe de l'habitation et le second élément étant solidaire de l'ensemble orientable de l'habitation. Le premier anneau est prévu avec au moins un passage transversal (80) mettant en communication la ou chaque chambre annulaire avec une ou plusieurs conduites fixes. Le second anneau, lui aussi, est prévu avec au moins un passage transversal (90) mettant en communication la ou chaque chambre annulaire avec une ou plusieurs conduites de l'ensemble tournant.

../...

Croydon Printing Company Ltd.

EP 0 022 119 A2

FIG. 1

Système de collecteurs pour conduites dans une habitation
orientable

La présente invention concerne un système de collecteurs
pour diverses conduites devant amener le passage des
fluides et des câbles électriques dans une habitation
comportant un ensemble habitable tournant ou orientable.

Un des problèmes essentiels qui se posent dans
l'érection et l'aménagement d'habitations orientables
est celui du passage et du raccordement des conduites
pour l'amenée de fluides (eaux alimentaire et sanitaire,
combustible liquide ou gazeux) vers les espaces habitables tournants, pour la décharge des eaux usées et pour
le passage des câbles électriques (distribution du
courant électrique du réseau, téléphonie, télédistribution, par exemple).

Pour résoudre ce problème général, il est indispensable d'apporter des solutions notamment aux trois
problèmes techniques suivants. Un premier problème
est celui de l'isolation thermique qu'il faut
assurer entre les conduites de fluides différents.
Par exemple, il est indispensable que soit assurée une
isolation thermique parfaite entre une arrivée d'eau
froide et une arrivée d'eau chaude sanitaire ou une
arrivée de fluide de chauffage. Il s'agit là d'un
problème thermique lié au confort indispensable de
l'habitation.

Un deuxième problème est celui de l'indépendance
et de l'autonomie entre les conduites de natures
différentes. Dans une habitation il faut en effet
prévoir, par exemple: une amenée d'eau froide, une amenée d'eau chaude sanitaire, une amenée d'eau chaude ou de fluide de chauffage, une décharge d'eaux usées, une amenée de gaz pour fourneaux de cuisine, des amenées d'électricité, de téléphonie et de télédistribution, et éventuellement, dans des réalisations plus spécifiques: une ou plusieurs amenées de boissons (bière, limonades, vin au tonneau), l'amenée de fluide pour réfrigérateurs, l'amenée d'air sous pression, etc. Avec de tels circuits de distribution multiples, il est impensable qu'en cas de panne ou de défectuosité quelconque dans un des circuits, il faille interrompre et donc mettre momentanément hors service tous les circuits, et faire appel en même temps à tous les corps de métier spécialisés : plombier, chauffagiste, électricien, technicien de téléphonie, etc. Il est donc indispensable de concevoir un système assurant une indépendance et une autonomie absolues entre les circuits et un système qui permet facilement l'accès à et la déconnexion de n'importe quel circuit individuel.

Enfin, un troisième problème est celui de la facilité d'adaptation du système aux applications particulières, aussi bien au moment de l'érection de l'habitation qu'ultérieurement pour des modifications ou extensions éventuelles.

Il existe certes déjà un dispositif connu sous le nom de joint tournant qui permet l'amenée d'eau et d'un fluide combustible ou l'évacuation d'eaux usées dans une habitation tournante. Ce dispositif se trouve décrit dans le brevet belge N° 642.617. Il s'agit d'une boîte à bourrage à cages cylindriques concentriques qui assure un écoulement axial, mais ce dispositif n'assure cependant pas une isolation adéquate entre les circuits parallèles de sorte qu'il ne convient

0022119

guère pour le passage concomitant d'eau froide et d'eau chaude, par exemple, car l'eau froide se trouverait réchauffée par la stagnation d'eau chaude ou de fluide chaud dans les cages. De plus, ce dispositif connu ne satisfait nullement aux critères d'autonomie des cicuits et il ne convient guère pour le passage de circuits multiples pour lesquels d'ailleurs il deviendrait rapidement trop encombrant, au point de constituer même un réel obstacle à l'aménagement d'une habitation orientable à accès central unique car il empièterait trop largement sur la surface habitable. En outre, ce dispositif ne peut satisfaire au critère d'adaptabilité en fonction des applications particulières.

Le dispositif connu ne convient pas non plus pour le passage de câbles électriques. Pour cet usage il existe certes des connecteurs électriques rotatifs qui comportent des bagues et des balais montés dans un boîtier. Ce type de dispositif ne convient cependant pas pour des habitations tournantes car toute adjonction d'une bague ou d'un balai exige le retour du dispositif à l'usine, ce qui est absolument impensable en pratique. Il faut par conséquent disposer d'un dispositif qui assure une parfaite autonomie entre les différents circuits électriques : distribution de courant, téléphonie, télédistribution, etc.

En conclusion, les problèmes techniques que pose le passage de conduites multiples dans des habitations orientables n'ont guère été résolus de façon satisfaisante et globale jusqu'à présent. L'invention vise précisément à résoudre ces problèmes en vue d'apporter une solution globale et pratique pour le passage des conduites dans une habitation orientable.

Ces problèmes sont résolus suivant l'invention par un système de collecteurs comprenant un axe central fixe sur lequel vient se fixer au moins un collecteur annulaire s'étendant autour de cet axe central. Chaque collecteur comprend deux anneaux adaptés et liés l'un à l'autre en sorte de délimiter entre eux une ou plusieurs chambres annulaires , un premier anneau étant fixe et monté solidairement sur l'axe central tandis que le second anneau est lié solidairement à l'ensemble tournant de l'habitation, ce second anneau étant monté en sorte de pouvoir se déplacer par rapport au premier anneau en même temps que l'ensemble tournant.Le premier anneau est prévu avec au moins un passage transversal mettant en communication la ou chaque chambre annulaire avec une ou plusieurs conduites fixes. Le second anneau, lui aussi, est prévu avec au moins un passage transversal mettant en communication la ou chaque chambre annulaire avec une ou plusieurs conduites de l'ensemble tournant.

Ce système permet d'assembler aisément, et de façon parfaitement autonome et facilement déconnectable, des collecteurs individuels pour les diverses conduites requises dans une habitation: amenées d'eau et de fluides, décharges, câbles électriques.Chaque collecteur individuel peut être réalisé dans de nombreux modes d'exécution parfaitement adaptés à chaque utilisation particulière envisagée. Est ainsi réalisé un système modulaire d'une extrême souplesse d'adaptation et d'extension.

L'invention est exposée avec plus de détails sur quelques exemples de formes de réalisation, nullement limitatifs, illustrés sur les dessins joints.
- la figure 1 est une vue en coupe axiale, suivant la ligne I-I de la figure 2, d'un premier exemple de forme de réalisation du système suivant l'invention;
- la figure 2 est une vue suivant la ligne II-II de la figure 1;

- la figure 3 est une vue suivant la ligne III-III de la figure 1;
- la figure 4 est une vue suivant la ligne IV-IV de la figure 1;
- les figures 5 et 6 illustrent, respectivement en coupe axiale et vue en plan, une variante de la forme de réalisation de la figure 1;
- les figures 7 à 16 illustrent quelques exemples de mode d'exécution des collecteurs annulaires dans le système suivant l'invention.

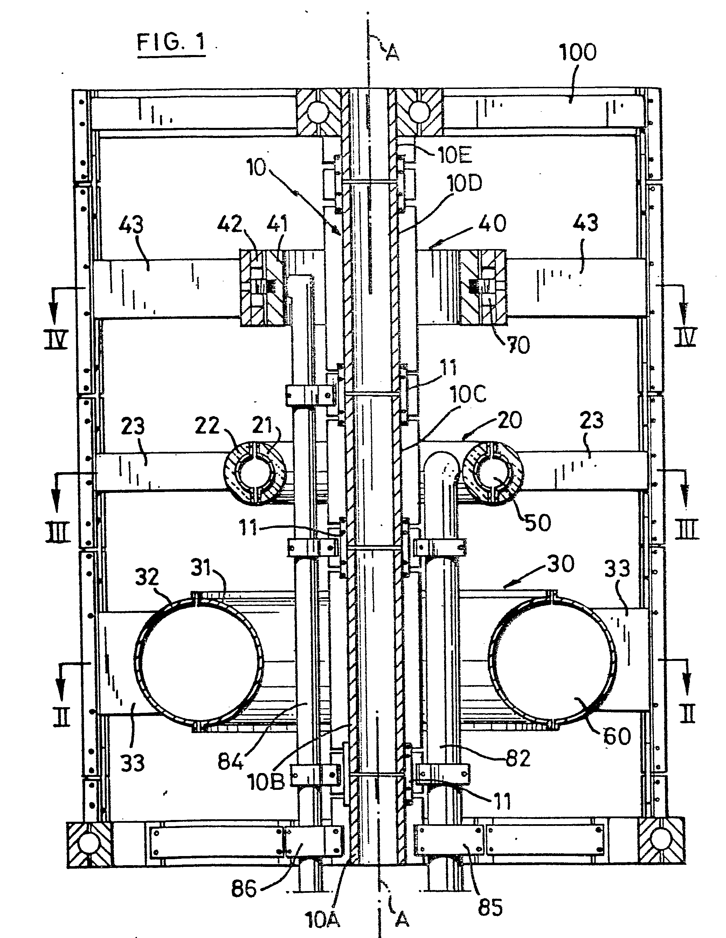

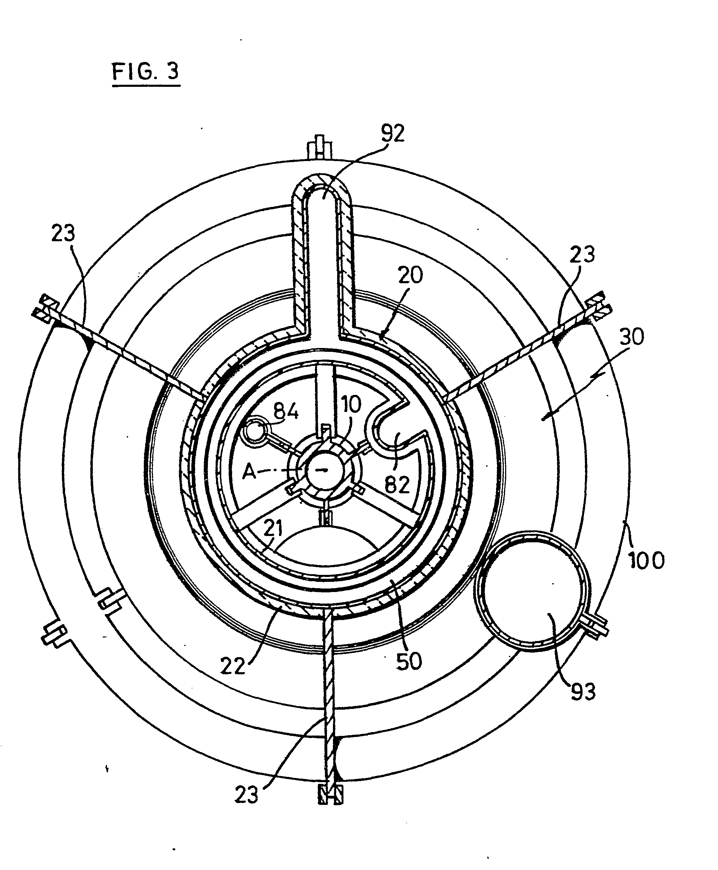

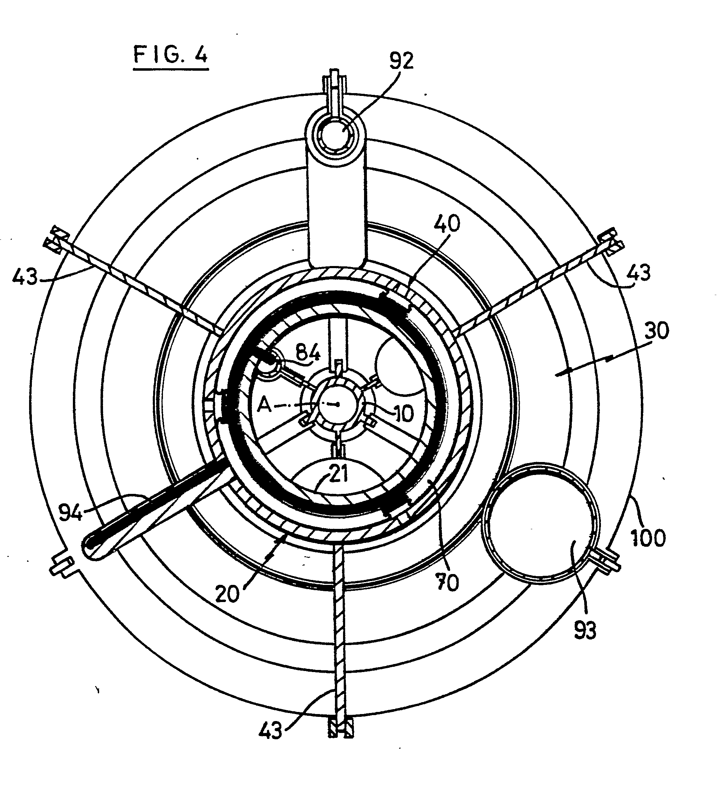

Sur les figures 1 à 4, la référence A désigne l'axe de rotation d'un ensemble tournant dont on ne voit que le bâti de support 100. Coaxialement à l'axe A s'étend un axe central fixe 10 constitué par exemple de plusieurs tronçons 10A, 10B, 10C,...assemblés bout à bout à l'aide de manchons de raccord 11. Sur l'axe central 10 sont montés plusieurs collecteurs annulaires, ici trois collecteurs 20, 30, 40 qui s'étendent symétriquement autour de l'axe. Le nombre de collecteurs peut être quelconque et chacun d'eux est, en principe, réservé à une utilisation particulière : par exemple, le collecteur 20 à une amenée d'eau, le collecteur 30 à la décharge des eaux usées, le collecteur 40 au passage d'un câble électrique. Les collecteurs 20, 30 et 40 ne sont que schématisés sur la figure 1, leur réalisation pouvant revêtir divers modes d'exécution dont quelques exemples typiques seront décrits plus loin. A cet endroit, on notera simplement que tous les collecteurs ont comme disposition commune de comprendre chacun deux éléments de forme générale annulaire, coaxiaux avec l'axe central 10. Le collecteur 20 comprend les éléments 21 et 22, le collecteur 30 comprend les éléments 31 et 32, et le collecteur 40 comprend les éléments 41 et 42.

Les éléments de chaque paire sont réunis en délimitant entre eux une chambre annulaire, 50, 60, 70 respectivement, qui s'étend autour de l'axe central 10.

Les éléments intérieurs 21, 31 et 41 sont montés solidairement sur l'axe central fixe 10 et sont donc également fixes. Les éléments extérieurs 22, 32 et 42 sont liés solidairement à l'ensemble tournant par des pattes d'attache 23,33,43 et sont donc entraînés avec l'ensemble tournant autour des éléments fixes correspondants. Les pattes d'attache sont ajustées pour assurer un alignement et un ajustement impeccables des anneaux extérieurs par rapport aux anneaux intérieurs. La chambre annulaire de chaque collecteur se trouve en communication d'une part avec une conduite fixe au moyen d'un passage transversal formé dans l'élément intérieur fixe et, d'autre part, avec au moins une conduite de l'ensemble tournant au moyen d'au moins un passage transversal formé dans l'élément extérieur mobile. Sur les dessins on a représenté, à titre illustratif, trois conduites fixes: une conduite d'amenée d'eau 82 pour raccordement au collecteur 20, une conduite de décharge d'eaux usées 83 pour raccordement au collecteur 30 et une gaine de câble électrique 84 pour raccordement au collecteur 40. Ces conduites fixes s'élèvent le long de l'axe central 10 et sont raccordées aux passages transversaux des anneaux intérieurs 21, 31, 41 des collecteurs correspondants.

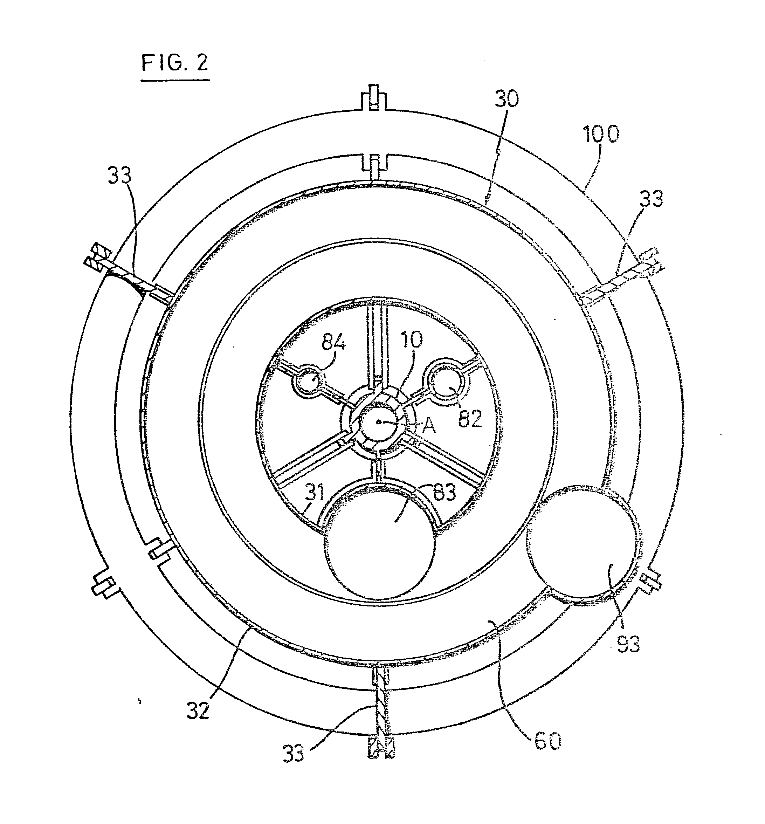

Aux passages transversaux ménagés dans les anneaux extérieurs 22, 32, 42 des collecteurs, et en communication avec les chambres annulaires 50, 60, 70 respectivement, sont raccordées des conduites solidaires de l'ensemble tournant. Sur les figures 2, 3 et 4 sont visibles une conduite 92 raccordée au collecteur 20, une conduite 93 raccordée au collecteur 30 et une conduite ou gaine 94 raccordée au collecteur 40. Ces conduites extérieures, dont le nombre peut évidemment être quelconque, se déplacent avec l'ensemble tournant autour de l'axe de rotation A et donc autour des anneaux intérieurs fixes des collecteurs, restant ainsi continuellement en communication avec les conduites fixes correspondantes par l'intermédiaire des chambres annulaires 50, 60, 70 respectives.

Dans la structure ainsi réalisée suivant l'invention, non seulement chaque circuit se trouve-t-il parfaitement isolé des autres, mais encore est-il entièrement autonome puisqu'il est associé à un collecteur propre. Celui-ci peut être facilement et rapidement retiré et remplacé, évitant ainsi une mise hors service de longue durée. L'adjonction d'un ou plusieurs collecteurs peut aussi se faire très facilement. Pour parfaire la facilité de raccordement et de déconnexion des collecteurs, les conduites fixes telles que 82, 83, 84 peuvent avantageusement être munies à leur pied de raccords ou connecteurs détachables adaptables à des éléments de raccord ou de connexion correspondants 85, 86 fixés aux têtes des conduites-mères ou des câbles principaux. De même, les conduites raccordées aux éléments mobiles des collecteurs, telles que les conduites 92, 93, 94, peuvent être munies, sur le dessus de l'ensemble du système des collecteurs, de raccords ou connecteurs détachables adaptables à des éléments de raccord ou de connexion fixés aux extrémités des conduites s'étendant dans les planchers de l'ensemble habitable tournant. Le système suivant l'invention résout ainsi tous les problèmes évoqués plus haut et apporte de cette façon une solution pratique et élégante dans l'art des habitations tournantes ou orientables.

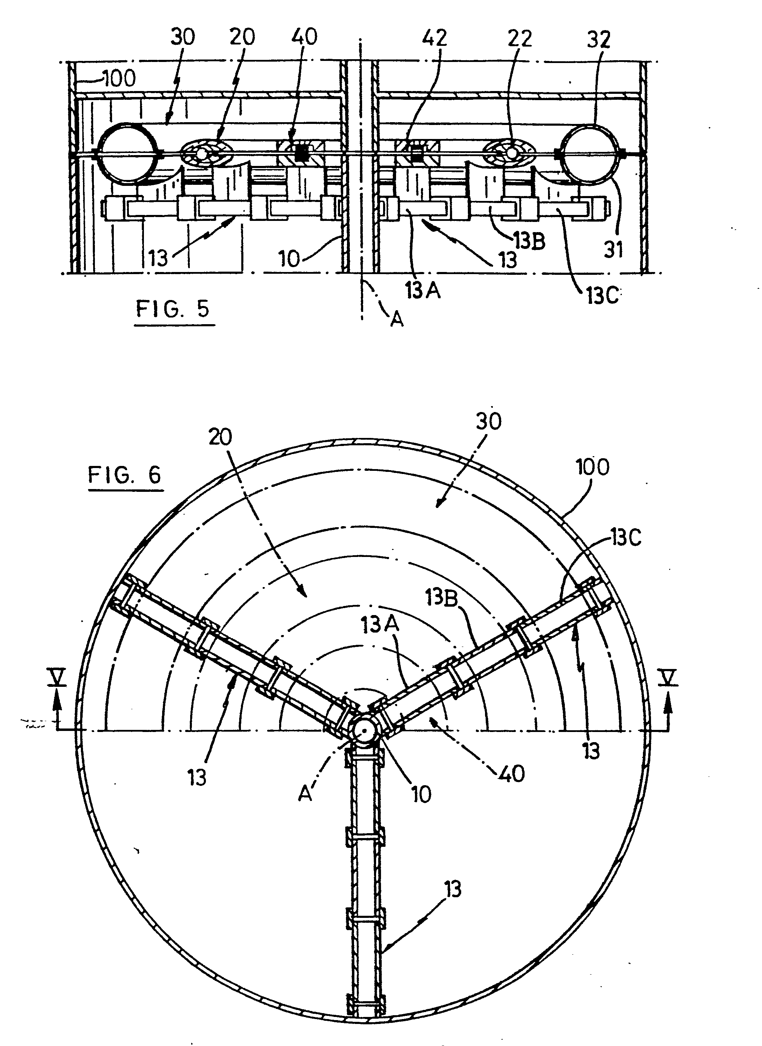

Dans l'exemple illustré aux figures 1 à 4, l'axe central fixe 10 est avantageusement constitué de plusieurs tronçons superposés 10A, 10B, ...., chacun portant un collecteur distinct et autonome. Tout en restant coaxiaux, les collecteurs peuvent être montés non pas dans des plans parallèles comme montré à la figure 1, mais de façon concentrique comme illustré aux figures 5 et 6. Dans cette forme de réalisation, l'axe central vertical 10 porte des bras radiaux 13 qui supportent les collecteurs coaxiaux et concentriques (20,30,40) dont les anneaux qui les constituent sont superposés. Ici également, les bras 13 peuvent avantageusement être constitués de tronçons fixés bout à bout(13A, 13B, ... ) avec chaque tronçon portant un collecteur distinct.

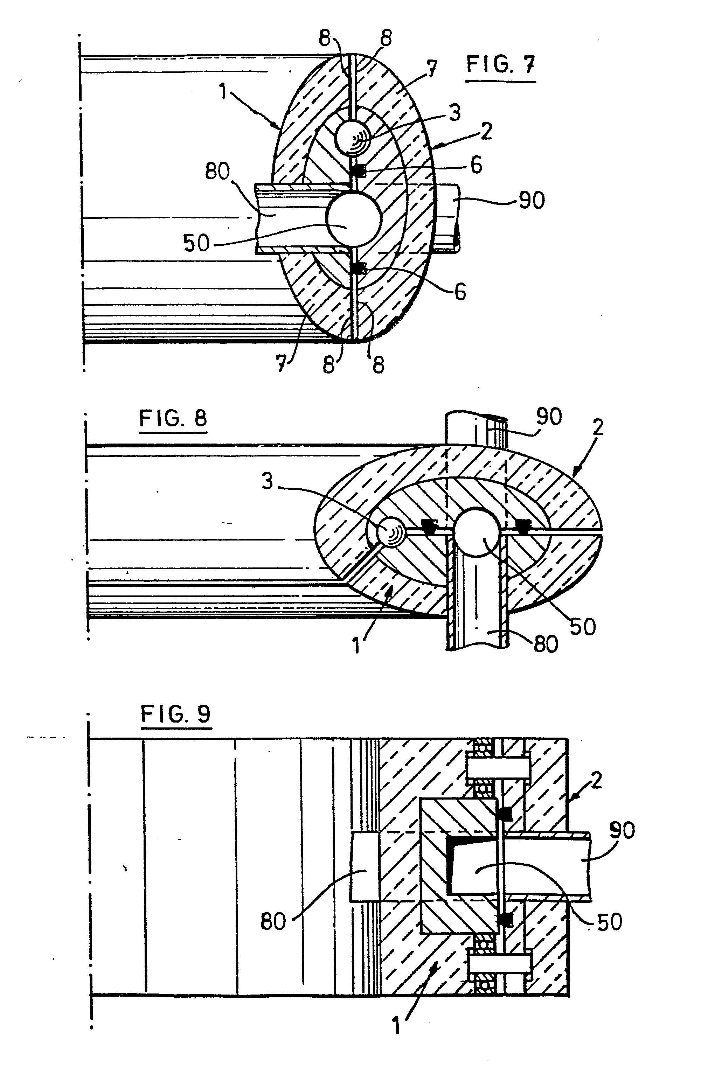

Ayant décrit la structure générale du système suivant l'invention, on décrira maintenant plus en détail la constitution d'un collecteur annulaire suivant l'invention en se reportant en particulier à la figure 7. Ce dessin montre une coupe axiale suivant l'axe d'un passage transversal d'entrée 80 dans la moitié droite de l'anneau intérieur. On distingue les deux anneaux coaxiaux 1 et 2 : l'anneau 1 est l'anneau fixe devant être monté sur l'axe central 10 et l'anneau 2 est l'anneau mobile, solidaire de l'ensemble tournant. Les deux anneaux ont des sections formées en sorte qu'ils aient deux faces verticales coopérantes. Celles-ci, lorsque les deux anneaux 1 et 2 sont assemblés, sont formées de manière à également délimiter une chambre annulaire 50, qui, ici, est en fait une chambre torique dans laquelle débouchent les passages transversaux 80 et 90. Le passage 90 représenté est montré dans une position dans laquelle il ne se trouve pas dans l'axe du passage d'entrée 80. La référence numérique 3 désigne l'une des billes d'un roulement avantageusement prévu pour faciliter le roulement de l'anneau extérieur 2 sur le pourtour de l'anneau intérieur 1. La référence numérique 6 désigne des anneaux d'étanchéité et la référence 7 désigne une gaine isolante retenue par des ailes 8. Dans cet exemple d'exécution, qui convient pour une amenée d'eau ou de fluide, les passages 80 et 90 sont dirigés radialement à travers des anneaux 1 et 2 concentriques. Quelques exemples de modes d'exécution équivalents sont illustrés aux figures 8 à 12.

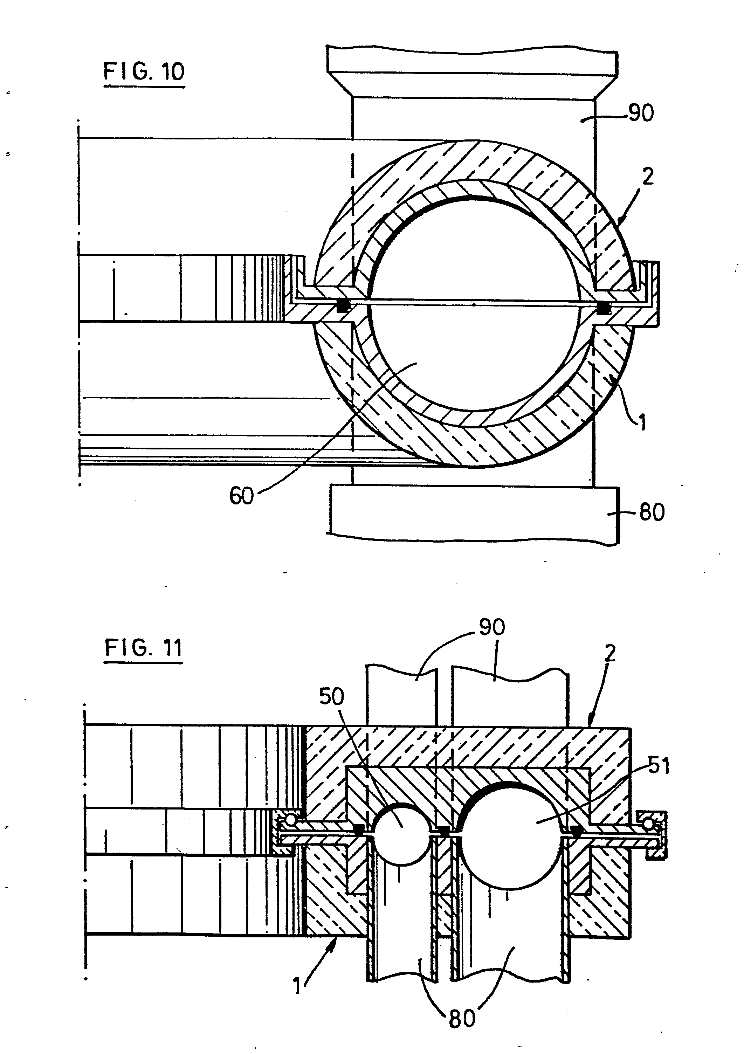

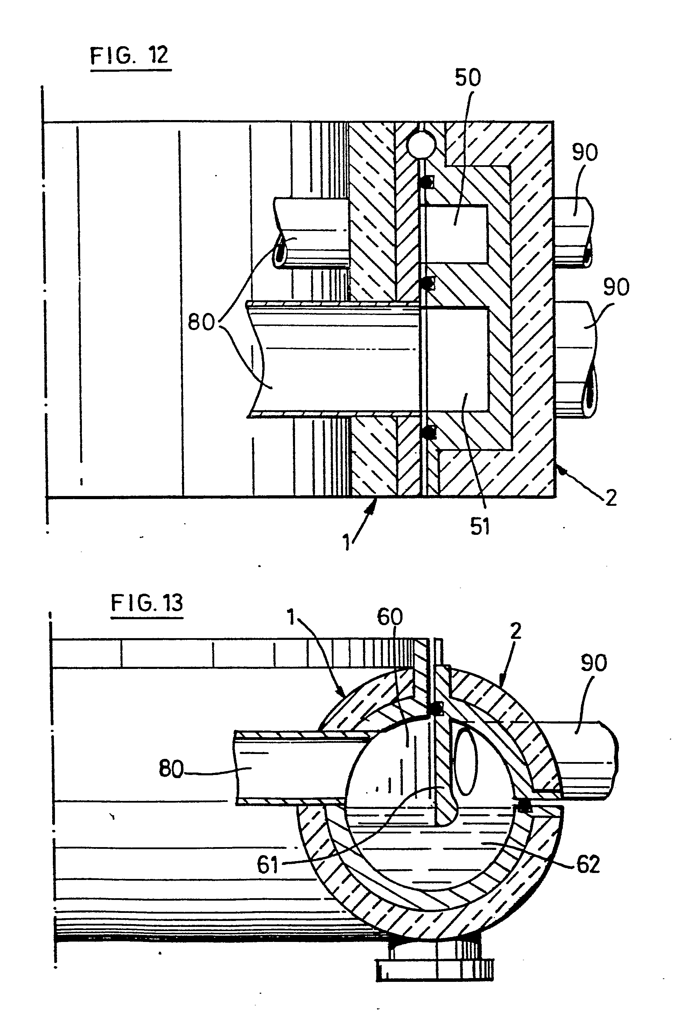

La figure 8 correspond sensiblement à la figure 7 tournée de 90°. Dans ce cas, l'anneau mobile 2 est posé et roule sur l'anneau fixe 1. La figure 9 illustre un mode d'exécution dans lequel les anneaux 1 et 2 ont des sections transversales formées pour délimiter une chambre annulaire de section rectangulaire. Dans le mode d'exécution illustré à la figure 10, les anneaux ont une section circulaire et se trouvent superposés avec des passages transversaux 80 et 90 qui s'étendent verticalement. Les figures 11 et 12 montrent deux modes d'exécution ménageant deux chambres annulaires 50 et 51.

La figure 13 illustre un mode d'exécution dans lequel l'anneau 2 présente une aile 61 qui s'étend dans la chambre annulaire torique 60 pour former un siphon avec compartiment à eau 62. Cette forme d'exécution est spécialement destinée aux circuits de décharge afin d'y éviter les remontées d'odeurs.

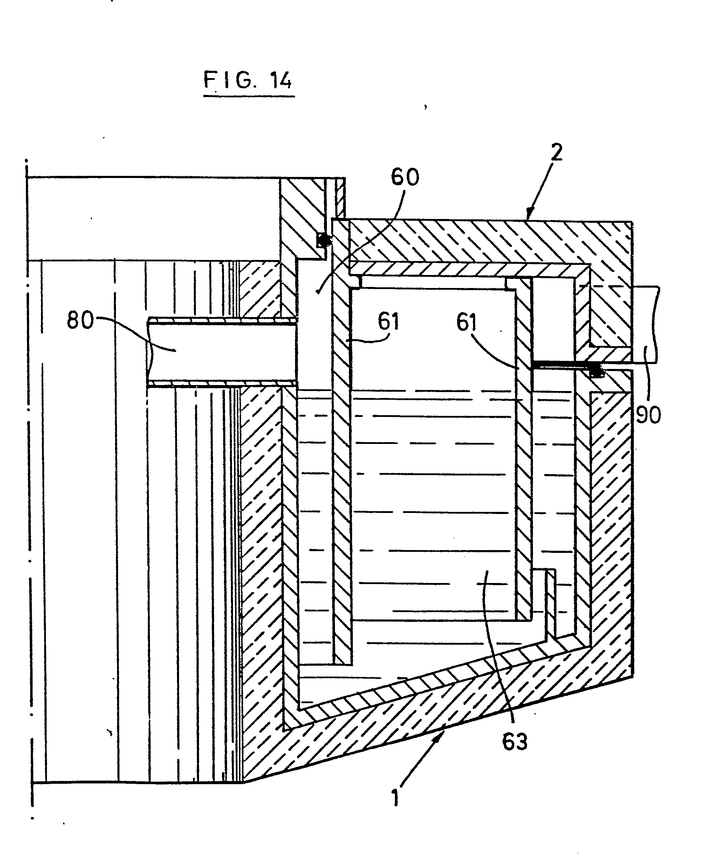

La figure 14 montre une forme d'exécution ménageant une cage à graisse 63 dans la chambre annulaire 60. Cette disposition permet de retenir les graisses contenues dans les eaux de décharge dans les cas où ces graisses pourraient entraîner la formation d'acides gras, ce qui est interdit par les législations de certains pays. Par ces derniers exemples on voit que la disposition annulaire suivant l'invention se prête aisément aux diverses adaptations que peuvent requérir les conditions particulières d'utilisation.

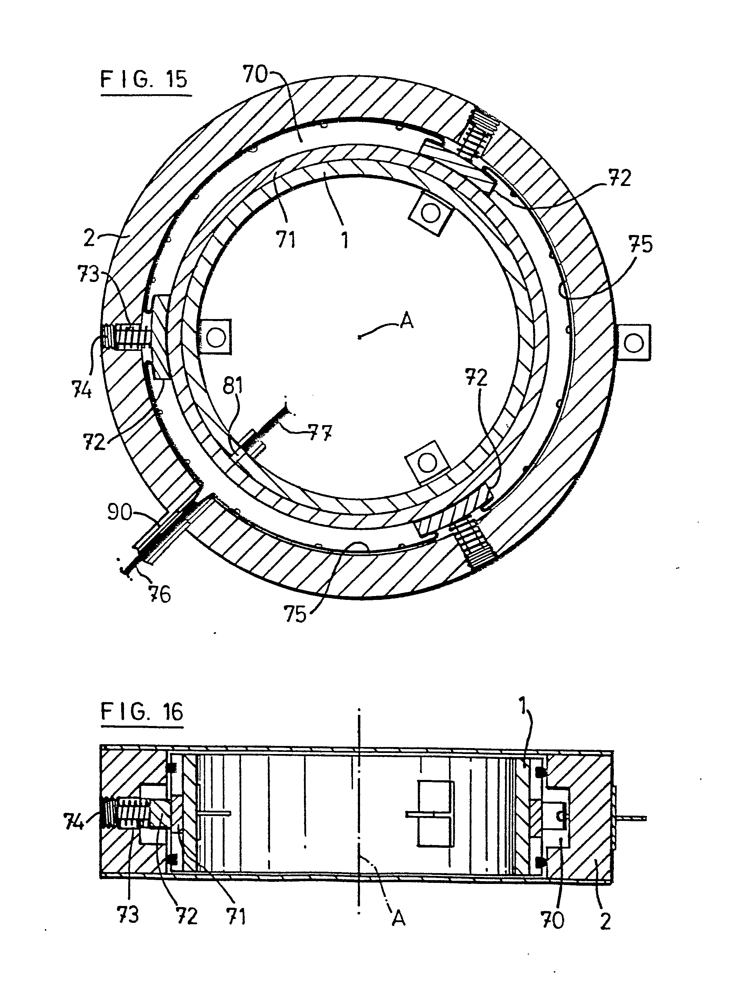

Le dispositif suivant l'invention s'adapte également pour le passage de câbles électriques. Les figures 15 et 16 illustrent, respectivement en coupe horizontale et en coupe axiale verticale, un exemple de mode d'exécution. Ici encore on retrouve deux anneaux coaxiaux 1 et 2 formant entre eux une chambre annulaire 70. Les anneaux 1 et 2 sont constitués d'une matière isolante. Sur sa face extérieure, à l'intérieur de la chambre 70, l'anneau 1 porte un anneau 71 en matière conductrice de l'électricité. Pour la facilité du dessin on n'a représenté qu'un seul anneau conducteur 71 pour le raccordement d'un conducteur électrique, mais en pratique on prévoira un anneau 71 par conducteur à raccorder. Chaque conducteur du câble d'arrivée 77 est connecté à une broche 81 logée dans un passage 80 de l'anneau fixe 1 et se trouvant en contact électrique avec un anneau 71 distinct. Sur le pourtour de chaque anneau conducteur 71 s'appuient des collecteurs 72, également en matière conductrice de l'électricité, ces collecteurs étant maintenus en contact contre l'anneau 71 par des ressorts 73 maintenus en compression par des bouchons 74 placés dans des ouvertures formées dans l'anneau 2. Les collecteurs 72 sont reliés par des câbles 75 eux-mêmes reliés à un conducteur de sortie 76 traversant le passage 90. Ainsi, un excellent contact électrique se trouve-t-il assuré par l'intermédiaire des collecteurs 72 qui se déplacent tout le long du pourtour de l'anneau fixe 71 et frottent sur la surface extérieure de celui-ci.

Il va de soi que le même agencement peut être aménagé dans un collecteur comportant deux anneaux superposés formés avec des passages transversaux verticaux.

Il est bien entendu également que les exemples décrits n'illustrent que quelques-uns des nombreux modes d'exécution possibles relevant de la même idée inventive.

REVENDICATIONS

1. Système de collecteurs pour conduites dans une habitation ayant un ensemble tournant autour d'un axe de rotation, caractérisé en ce qu'il comprend : un axe central fixe (10) s'étendant coaxialement à l'axe de rotation; au moins un collecteur annulaire (20) comprenant un premier et un deuxième anneau, de sections quelconques, associés en sorte de délimiter au moins une chambre annulaire (50) s'étendant symétriquement autour dudit axe de rotation, le premier anneau (21) étant fixe et monté solidairement sur l'axe central fixe, et le second anneau (22) étant solidaire de l'ensemble tournant de l'habitation, cet anneau étant monté sur le premier anneau en sorte de pouvoir se déplacer par rapport au premier anneau par rotation autour dudit axe de rotation; au moins un premier passage transversal (80) formé dans le premier anneau pour mettre ladite chambre annulaire en communication avec une conduite fixe; et au moins un deuxième passage transversal (90) formé dans le second anneau pour mettre ladite chambre annulaire en communication avec une conduite de l'ensemble tournant.

2. Système selon la revendication 1, caractérisé en ce qu'il comprend plusieurs collecteurs annulaires coaxiaux (20,30,40) s'étendant dans des plans parallèles perpendiculaires à l'axe central fixe, les deux anneaux de chaque collecteur étant concentriques.

3. Système selon la revendication 2, caractérisé en ce que l'axe central fixe (10) est constitué de plusieurs tronçons fixés bout à bout (10A, 10B,...), et en ce que chaque collecteur est monté sur un tronçon d'axe distinct.

4. Système selon la revendication 1, caractérisé en ce qu'il comprend plusieurs collecteurs annulaires concentriques montés sur des bras (13) solidaires dudit axe central fixe (10), les deux anneaux de chaque collecteur étant superposés l'un à l'autre.

5. Système selon la revendication 4, caractérisé en ce que les bras sont constitués de plusieurs tronçons fixés bout à bout (13A,13B,..) et en ce que chaque collecteur est monté sur un tronçon distinct de chacun desdits bras.

6. Système selon l'une quelconque des revendications 1 à 5, caractérisé en ce qu'au moins un collecteur annulaire comprend plusieurs chambres annulaires (50,51) superposées.

7. Système selon l'une quelconque des revendications 1 à 5, caractérisé en ce qu'au moins un collecteur annulaire comprend plusieurs chambres annulaires (50,51) concentriques.

8. Système selon l'une quelconque des revendications 1 à 7, caractérisé en ce qu'un des anneaux d'au moins un collecteur annulaire comporte une aile annulaire intérieure ( 61 ) formant cloison dans au moins une chambre annulaire de manière à former un siphon.

9. Système selon l'une quelconque des revendications 1 à 7, caractérisé en ce que les anneaux d'au moins un collecteur annulaire comportent deux ailes annulaires intérieures ( 61 ) s'étendant dans au moins une chambre annulaire de manière à former un siphon et une boîte à graisse.

10. Système selon ia revendication 1, caractérisé en ce que le premier anneau porte sur sa face tournée vers le second anneau, au moins un anneau extérieur en matière conductrice de l'électricité ( 71 ) et en ce que le second anneau porte sur sa face tournée vers le premier anneau, plusieurs collecteurs en matière conductrice de l'électricité ( 72 ), situés en regard de chaque anneau extérieur conducteur, lesdits collecteurs étant appuyés contre la surface des anneaux conducteurs correspondants, chaque anneau conducteur (71) étant connecté à un conducteur d'un câble d'arrivée (77) à travers un passage transversal dans le premier anneau, et les collecteurs associés à un même anneau conducteur étant reliés électriquement entre eux et à un conducteur de sortie (76) à travers un passage transversal dans le second anneau.

FIG. 1

0022119

FIG. 2

FIG. 3

0022119

BAD ORIGINAL

FIG. 4

FIG. 5

FIG. 6

FIG. 7

FIG. 8

FIG. 9

FIG. 10

90

2

1

60

80

FIG. 11

90

2

50

51

1

80

FIG. 12

FIG. 13

FIG. 14

FIG. 15

70

72

2

75

73

74

81

77

72

72

A

90

76

75

1

71

FIG. 16

1

74

73   72   71

A

70   2